# EUROPEAN PATENT APPLICATION

(11) **EP 4 814 900 A1**
(43) Date of publication of application: **30.09.2026**
(21) Application number: 25192683.8
(22) Date of filing: 30.07.2025
(51) Int. Cl.: G06V 20/58

(54) **APPARATUS FOR DETECTING MOVING OBJECT AND MOVING OBJECT INCLUDING THE APPARATUS**

(30) Priority: 24.03.2025 KR 20250037387
(71) Applicant: Hyundai Mobis Co., Ltd., Gangnam-gu Seoul 06141 (KR)
(72) Inventor: KIM, Kang Hee, 16891 Yongin-si (KR)
(74) Representative: Vossius & Partner Patentanwälte Rechtsanwälte mbB

(57) **Abstract**

An apparatus for detecting a nearby moving object includes an image sensor to obtain an image of surrounding areas and a processor to obtain position information of a plurality of feature points of the nearby moving object from the obtained image and estimate position information or shape information of the nearby moving object by correcting the obtained position information of the feature points, in which the processor reflects height information of a body of the nearby moving object from ground to the obtained position information of the feature points.

## Description

This application claims the benefit of Korean Patent Application No. 10-2025-0037387, filed on March 24, 2025.

### BACKGROUND

### Technical Field

The present disclosure relates to an apparatus for detecting a nearby moving object and the moving object including the apparatus, and more particularly, to a technology to detect a moving object and correct position information of the moving object.

### Discussion of the Related Art

Image-based space detection (SD) refers to a technology to detect a drivable area, an empty space, an obstacle area, etc., by using image data obtained through an image sensor such as a camera.

Image-based SD may extract a feature of a nearby object using a deep-learning scheme to process an image using a convolutional neural network (CNN) and learning the meaning (a road surface, an obstacle, etc.) of each pixel.

Segmentation refers to separating an object area on a pixel basis and includes semantic segmentation in which each pixel is classified as a road surface/obstacle/sky, etc., and instance segmentation in which each object is detected individually.

Coordinates according to SD (hereinafter, SD coordinates) are obtained by finding a boundary between an object and a background and converting the boundary into a point. An image plane (coordinates) is converted into a ground coordinate system such that a location of the object in an image is expressed as two-dimensional coordinates.

For the SD coordinates, position information of the object or distance information to the object is obtained through a lookup table storing respective coordinates, i.e., a distance corresponding to each pixel.

However, as a body of a moving object such as a vehicle stands or moves at a certain height above the ground, coordinates acquisition or position information acquisition through the lookup table with designated distances corresponding to SD coordinates is unavoidably less accurate.

Accordingly, the present disclosure provides technologies to remove a mistake or an error corresponding to a height or reflect an influence upon the height to position information in detecting a moving object having the height from the ground, in image-based detection.

### SUMMARY

The present disclosure aims to provide an apparatus for detecting a nearby moving object or the moving object including the apparatus.

The present disclosure also aims to provide a scheme to correct position information of the nearby moving object.

It will be appreciated by persons skilled in the art that the objects that could be achieved with the present disclosure are not limited to what has been particularly described hereinabove and the above and other objects that the present disclosure could achieve will be more clearly understood from the following detailed description.

According to an aspect of the present disclosure, an apparatus for detecting a nearby moving object includes an image sensor configured to obtain an image of surrounding areas and a processor configured to obtain position information of a plurality of feature points of the nearby moving object from the obtained image and estimate position information or shape information of the nearby moving object by correcting the obtained position information of the feature points, in which the processor may be configured to reflect height information of a body of the nearby moving object from ground to the obtained position information of the feature points.

Additionally or alternatively, the processor may be further configured to correct position information of a feature point having a class being a body of the moving object among the plurality of feature points.

Additionally or alternatively, the processor may be further configured to correct the obtained position information of the feature points by using a relationship among information about a height of the image sensor from the ground, information about a position of a point at which a position of the image sensor is projected perpendicularly to the ground, and the obtained position information of the feature points.

Additionally or alternatively, the processor may be further configured to obtain the corrected position information of the feature point by using a preset value of the height or a distance from the ground of the body of the nearby moving object and the relationship.

Additionally or alternatively, the processor may be further configured to obtain a coefficient for correction of a first feature point among the plurality of feature points by using a distance to the first feature point which is obtained by a distance measurement sensor and the relationship, and obtain corrected position information of the other feature points using the obtained coefficient, and the obtained coefficient may be related to an estimate value of a height or a distance of the body of the nearby moving object from the ground.

Additionally or alternatively, the processor may be further configured to obtain corrected position information of the plurality of feature points while adjusting a ratio of a height or a distance of the body of the nearby moving object from the ground to a height of the image sensor from the ground between 0 and 1 and determining a ratio of in a case where a sum of minimum distances between a straight line passing through a reference feature point among the plurality of feature points and a corrected position of each of the plurality of feature points becomes minimum, and the plurality of feature points may be estimated to have position information corrected based on the determined ratio.

Additionally or alternatively, the processor may be further configured to obtain corrected position information of the plurality of feature points while adjusting a ratio of a height or a distance of the body of the nearby moving object from the ground to a height of the image sensor from the ground between 0 and 1 and determine a ratio in a case where a slope difference between two straight lines connecting two feature points adjacent to the reference feature point among the plurality of feature points to the reference feature point become minimum, and the feature points may be configured to have position information corrected based on the determined ratio.

Additionally or alternatively, the reference feature point may include a feature point closest to the apparatus among feature points having a class being a wheel of the moving object.

Additionally or alternatively, the processor may be further configured to divide the plurality of feature points into at least two groups, for feature points of a first group among the at least two groups, obtain a coefficient for correction of a first feature point among the feature points of the first group by using a distance to the first feature point which is obtained by the distance measurement sensor and the relationship, and obtain corrected position information of the other feature points among the feature points of the first group using the obtained coefficient, and for feature points of a second group among the at least two groups, obtain corrected position information of the feature points of the second group while adjusting a ratio of a height of the body of the nearby moving object from the ground to a height of the image sensor from the ground between 0 and 1, and determine a ratio of in a case where a slope difference between two straight lines connecting two feature points adjacent to a reference feature point among the feature points of the second group to the reference feature point becomes minimum, and the feature points of the second group may be estimated to have position information corrected based on the determined ratio.

According to another aspect of the present disclosure, a method for detecting a nearby moving object, the method includes obtaining an image of surrounding areas; and
obtaining position information of a plurality of feature points of the nearby moving object from the obtained image and estimate position information or shape information of the nearby moving object by correcting the obtained position information of the feature points, wherein a height information of a body of the nearby moving object from ground is reflected to the obtained position information of the feature points.

According to another aspect of the present disclosure, a moving object configured to detect a nearby moving object includes an image sensor configured to obtain an image of surrounding areas and a processor configured to obtain position information of a plurality of feature points of the nearby moving object from the obtained image and estimate position or shape information of the nearby moving object by correcting the obtained position information of the feature points, in which the processor may be configured to reflect height information of a body of the nearby moving object from ground to the obtained position information of the feature points.

The above-described solutions of the present disclosure are a part of embodiments of the present disclosure. In addition to the solutions to the above-described problem, various solutions may be derived and understood based on the detailed description of the present disclosure described below.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a block diagram of an autonomous vehicle to which an autonomous device is applicable;
FIG. 2 is a diagram showing an example of an autonomous device being applied to a vehicle;
FIG. 3 shows image-based recognition of another vehicle according to conventional art;
FIG. 4 shows a collision test scenario with another vehicle with respect to low-speed backward driving of an ego vehicle;
FIGS. 5 and 6 show concepts of location correction of a nearby moving object according to the present disclosure;
FIG. 7 shows data before and after location correction of a nearby moving object according to the present disclosure;
FIG. 8 shows an example using a scheme to use two types of data for location correction of a nearby moving object according to the present disclosure;
FIGS. 9 and 10 show an example using a straight-line distance model for location correction of a nearby moving object according to the present disclosure.
FIG. 11 shows data before and after location correction of a nearby moving object according to the present disclosure;
FIGS. 12, 13, and 14 show correction of SD data based on an example using a convex smooth curve model for location correction of a nearby moving object according to the present disclosure;
FIG. 15 is a flowchart of a method of correcting a location of a nearby moving object according to the present disclosure;
FIGS. 16 and 17 are flowcharts of a method of correcting a location of a nearby moving object according to the present disclosure;
FIGS. 18, 19, and 20 show a scenario for location correction of a nearby moving object according to the present disclosure; and
FIG. 21 is a block diagram of an apparatus for detecting a nearby moving object according to the present disclosure.

### DETAILED DESCRIPTION

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

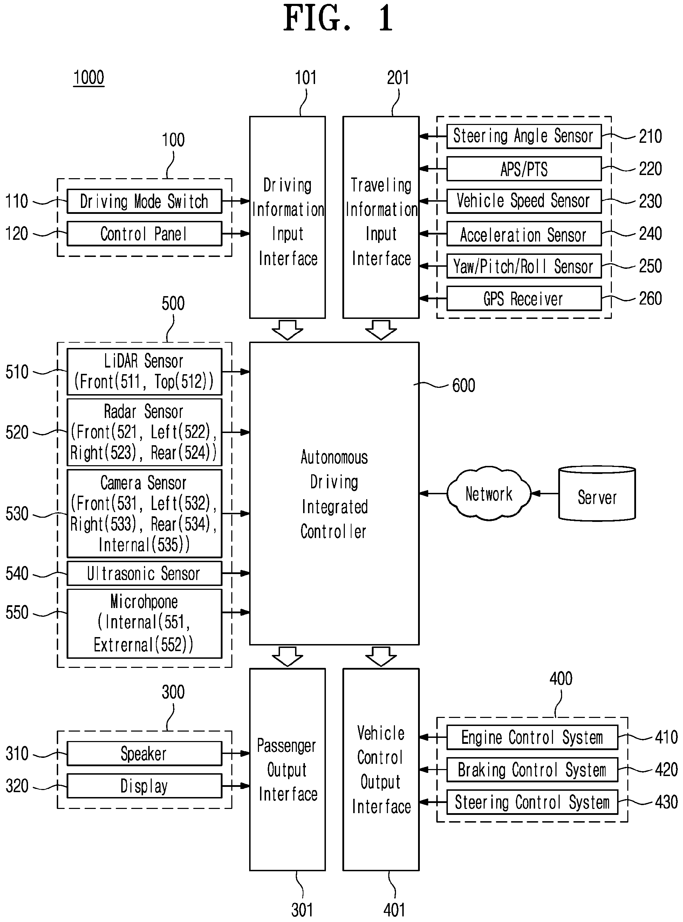

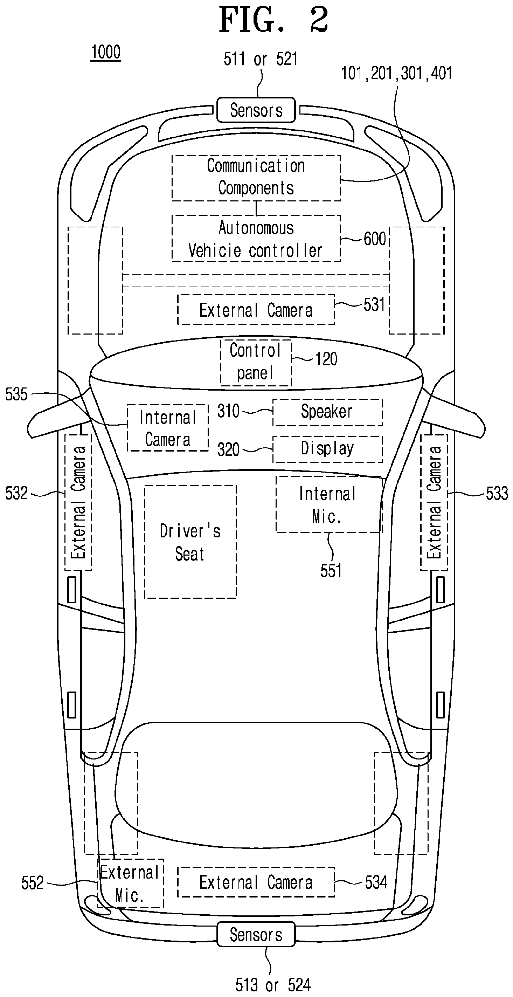

FIG. 1 is an overall block diagram of an autonomous driving control system to which an autonomous driving apparatus according to any one of embodiments of the present disclosure is applicable. FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

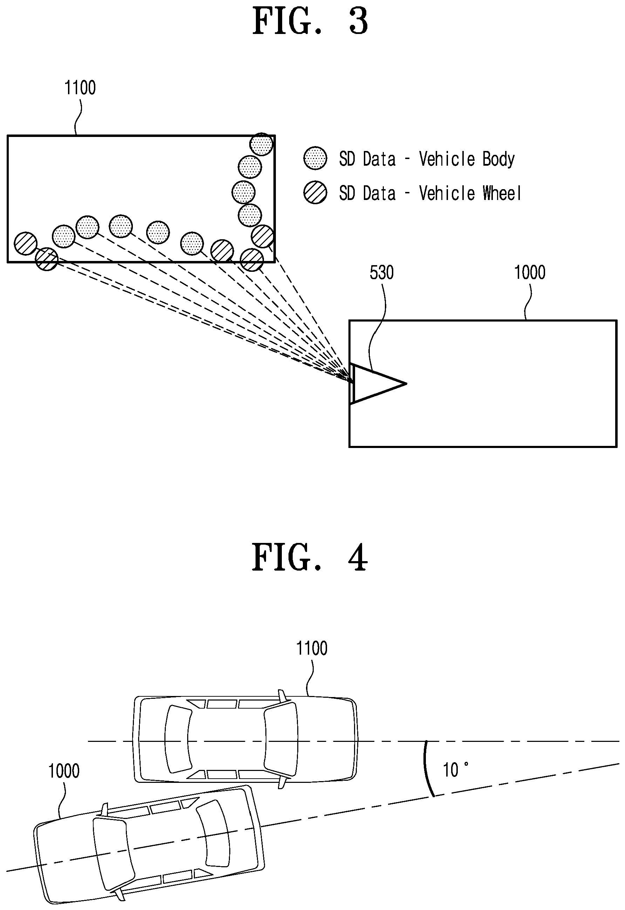

FIG. 3 shows image-based recognition of another vehicle according to conventional art.

A vehicle 1000 may detect and recognize a nearby vehicle 1100 based on an image obtained through an image sensor like a camera 530. According to image-based feature point extraction, a class of each feature point may be classified and may be obtained by a processor, etc., of the vehicle 1000.

As is shown, points in or around the nearby vehicle 1100 may indicate feature points extracted from the image. The nearby vehicle 1100 may actually have a shape similar to a rectangle, but a body part of the nearby vehicle 1100 has an error in a shape thereof according to an image-based recognition result. For example, the body part of the nearby vehicle 1100 may be recognized as a shape more inward than the actual shape thereof, increasing the possibility of collision in parking control.

Such a problem may originate from a scheme to estimate, determine, or obtain a position or a distance based on segmentation and a lookup table indicative of a distance corresponding to each pixel in image-based SD in which height information of an object located at a specific height from the ground, such as a body of a vehicle, is not considered. Hereinbelow, a result of estimating a position or a distance of an object as an existing distance corresponding to a pixel of an image will be referred to as "SD data". The SD data may have a format of two-dimensional (2D) coordinates.

FIG. 4 shows a collision test scenario with another vehicle with respect to low-speed backward driving of an ego vehicle.

Due to a position recognition error of the nearby vehicle 1100 shown in FIG. 3, a test criterion may not be satisfied in the collision test scenario shown in FIG. 4.

In addition to the shown test scenario, in other parking control-related assistance systems, e.g., remote smart parking assist (RSPA), memory parking assist (MPA), manual remote parking assist (MRA), etc., a position recognition error of the nearby vehicle 1100 may cause collision between the ego vehicle 1000 and the other vehicle 1100.

Hereinbelow, a term "moving object" instead of a vehicle will be used. The moving object may include various objects having mobility such as a robot, urban air mobility (UAM), etc., as well as a vehicle.

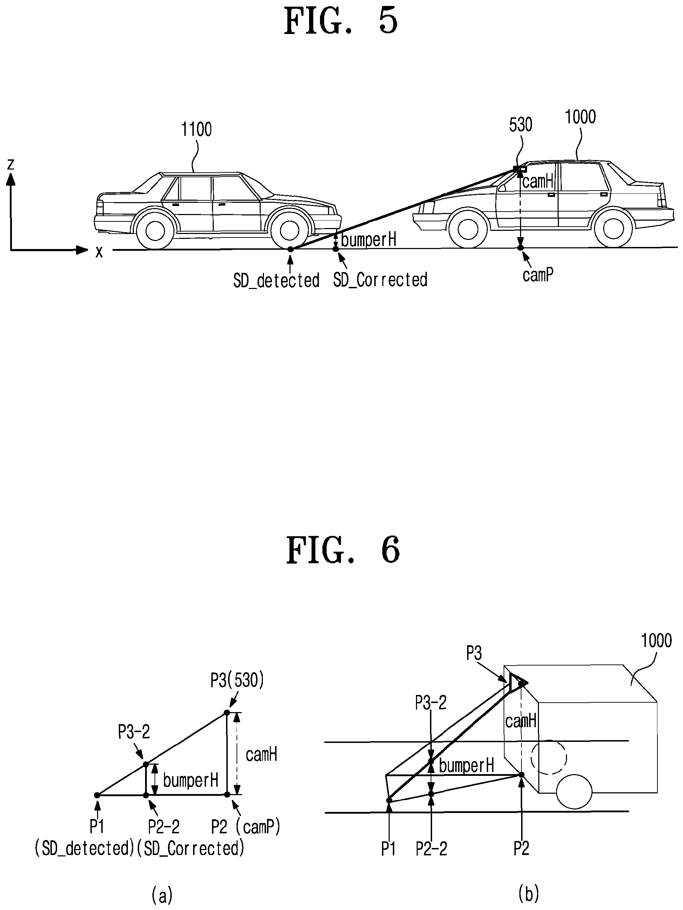

FIGS. 5 and 6 show concepts of position correction of a nearby moving object according to the present disclosure.

As described above, SD data may not consider a height from the ground of the object. Thus, as shown in FIG. 5, SD data SD_detected of the nearby moving object 1100 or a position corresponding thereto, which may be obtained by the moving object 1000, may be modelled as being on the ground. However, it is shown in FIG. 5 that the SD data SD_detected corresponds to a tire tread or contact point of the nearby moving object 1100, which is not intended.

An actual outer boundary of the nearby moving object 1100 may be a component such as a bumper of the nearby moving object, such that as shown in FIG. 5, position information of the nearby moving object 1100 needs to be estimated as corrected SD data SD_corrected. That is, the position information of the nearby moving object 1100 may need to reflect a height of the body of the nearby moving object 1100 from the ground.

Generally, a height of a body bottom surface of a moving object from the ground is referred to as a "ground clearance" which may be a height of the lowermost portion of the bottom surface of the moving object from the ground, but herein, may mean an average ground clearance of the moving object. That is, a description of the present disclosure will be made assuming that a body of each moving object has a single value as a height from the ground.

The corrected SD data SD_corrected may be obtained according to a relationship between the nearby moving object 1100 and the moving object 1000. That is, by using a similarity relationship between two triangles, the corrected SD data SD_corrected may be obtained.

More specifically, a similarity relationship, i.e., a proportional expression, between a first triangle and a second triangle may be used in which the first triangle includes a first point SD_detected, a second point camP, and a third point corresponding to a position of the image sensor or the camera 530, shown in FIG. 5, and a second triangle includes the first point, a 2-2nd point SD_corrected, and a 3-2nd point in which a line drawn vertically toward the body of the nearby moving object 1100 from "SD_corrected" meets the nearby moving object 1100. The 3-2nd point may have a distance of bumperH from the 2-2nd point. Depending on a name thereof, bumperH may be understood as indicating a height of a bumper of the nearby moving object 1100 from the ground, but the present disclosure is not limited thereto. That is, bumperH may indicate a height of the body of the nearby moving object 1100 from the ground, i.e., the above-described ground clearance of the moving object.

Referring to (a) of FIG. 6, the above-described two triangles are shown. The first triangle including P1, P2, and P3 and the second triangle including P1, P2-2, and P3-2 are shown. In the present disclosure, P1, P2, and P3 correspond to previously known information. Thus, if bumperH is known, information of P2-2 may also be obtained.

According to the following Equation, a position of P2-2, i.e., SD_corrected may be obtained.${SD}_{corrected} = \frac{\left(camH-bumperH\right) ∗ {SD}_{detected} + bumperH ∗ camP}{camH}$

Equation 1 may be simplified as below.${SD}_{corrected} = \left(1-H\right) ∗ {SD}_{detected} + H ∗ camP$

Herein, SD_detected may indicate coordinates of the obtained SD data, and SD_corrected may coordinates of the corrected SD data. However, in equations, horizontal coordinates among 2D coordinates are not considered. camH indicates a height of an image sensor, such as the camera 530 of the moving object 1000, from the ground, and camP indicates coordinates of a point in which the position of the image sensor, such as the camera 530 of the moving object 1000, is projected perpendicularly to the ground. H = bumperH/camH.

Referring to the foregoing equations, a relationship between SD_detected and SD_corrected may be defined.

Referring to (b) of FIG. 6, (a) of FIG. 6 is expressed three-dimensionally, which indicates that the foregoing equation or a relationship corresponding thereto (i.e., a relationship between SD_detected and SD_corrected) is equally applicable to any feature point. In an actual situation, there may be an error feature points.

Herein, two schemes using the foregoing equation or relationship will be proposed.

As the first scheme, for SD data of a feature point having a class being "vehicle body" or a class corresponding thereto, out of the obtained SD data, bumperH may be assumed to be a preset value (e.g., 20 cm) to obtain position information of P2-2 SD_corrected.

SD data of a feature point obtained for a moving object may have a class being "body" or a class corresponding thereto, or a class being "wheel" or a class corresponding thereto. A body of a moving object like a vehicle has a certain height from the ground, a different moving object may have a different value, but if SD data is corrected using a preset value, more accurate position information may be obtained. If information about a type of the nearby moving object 1100 may be obtained from an image, bumperH for each type may be defined and may be applied for each type of the nearby moving object 1100, thereby correcting the SD data.

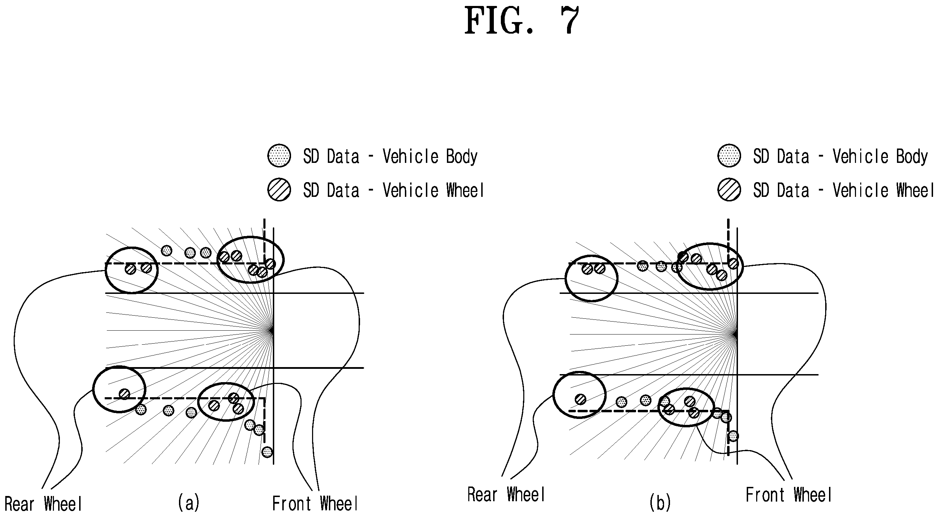

FIG. 7 shows data before and after position correction of a nearby moving object according to the present disclosure.

(a) of FIG. 7 shows the obtained SD data SD_detected on a 2D plane, and (b) of FIG. 7 shows, on a 2D plane, corrected SD data obtained through correction using bumperH with respect to SD data having a class being "body" out of the obtained SD data. SD data having a class being "wheel" is not corrected. Referring to (b) of FIG. 7, in comparison to (a) of FIG. 7, it may be seen that corrected SD data is located closer to a straight line connecting SD data of feature points corresponding to front and rear wheels to each other. That is, a detection or recognition result more similar to an actual shape of the nearby moving object 1100 may be obtained through correction of the SD data. Thus, the accuracy or reliability of parking control, braking control, etc., may be improved.

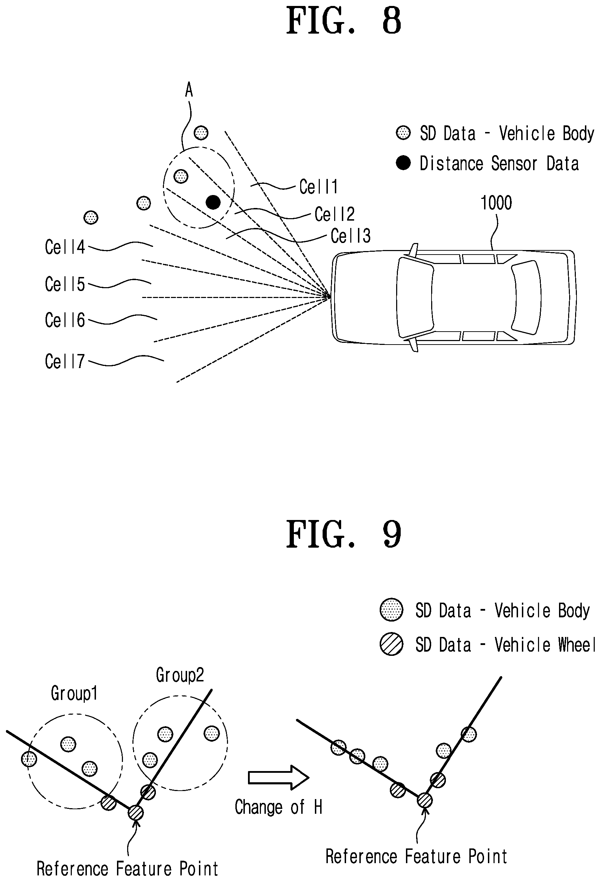

FIG. 8 shows an example using a scheme to use two types of data for position correction of a nearby moving object according to the present disclosure.

In FIG. 8, a peripheral area (e.g., a rear area) obtained through an image sensor, such as the camera 530 of the moving object 1000, may be divided into a plurality of cells, and presence or a position of SD data or distance sensor data for a feature point included in each cell is indicated.

As is shown, in Cell 2, for a feature point, both SD data and distance sensor data exist and positions thereof are indicated. The distance sensor data may be distance or coordinate information measured by a sensor for directly measuring a distance. The sensor for directly measuring a distance may include, but not limited to, an ultrasonic sensor, a radar sensor, a LiDAR sensor, etc.

Generally, the distance sensor data has a higher accuracy than SD data obtained by image-based object detection or recognition. Thus, if there are SD data and distance sensor data for a specific feature point, the corrected SD data may be replaced with the distance sensor data or coordinate information corresponding thereto to obtain the corrected SD data for the other feature points using the above-described relationship shown in FIG. 6.

In other words, as the second scheme, for SD data of a feature point having a class being "vehicle body" or a class corresponding thereto, out of the obtained SD data, a scheme to use distance sensor data for the feature point will be proposed. For the feature point for which both the SD data and the distance sensor data are obtained, the distance sensor data may be converted into the corrected SD data SD_corrected to obtain a coefficient of Equation 1 or Equation 2.

That is, by using the following equations, the coefficient of Equation 1 or Equation 2, bumperH/camH, or H may be obtained.$\begin{matrix}Distance sensor data \left(or coordinates correponding thereto\right) \\ = \frac{\left(camH-bumperH\right) ∗ {SD}_{detected} + bumperH ∗ camP}{camH}\end{matrix}$

$\begin{matrix}Distance sensor data \left(or coordinates corresponding thereto\right) \\ = \left(1-H\right) * {SD}_{detected} + H * camP\end{matrix}$

As described above, camP or camH is previously known information, such that by substituting the obtained SD data SD_detected and the corrected SD data (i.e., the distance sensor data) corresponding thereto into Equation 4, bumperH may be obtained. Thus, for example, Equation 4 may be arranged as below, thereby obtaining the corrected SD data SD_corrected corresponding to the obtained SD data SD_detected.${SD}_{corrected} = a ∗ {SD}_{detected} + b$

Herein, a = 1 - bumperH/camH, and b = bumperH/camH*camP.

Referring to (b) of FIG. 6, as the same equation or relationship may be applied to all feature points, if there are both SD data and distance sensor data for a feature point included in any one of a plurality of cells in an image obtained by the moving object 1000, the obtained SD data may be corrected using the scheme according to a second embodiment.

Thus, not only the shape of the nearby moving object 1100, but also a distance to the nearby moving object may be corrected. As the distance sensor data becomes accurate, a more accurate corrected value may be obtained.

However, if a difference between the obtained SD data and the distance sensor data exceeds a threshold value, the present scheme may not be adopted. This is because the distance sensor data and the obtained SD data may indicate different moving objects (objects or things).

Hereinbelow, a third scheme will be described. A third embodiment regards a scheme to determine bumperH or bumperH/camH(=H) having the least shape error based on a reference shape of a general moving object and obtain corrected SD data corresponding thereto.

H indicates a ratio of a height of the body of the nearby moving object 1100 from the ground to a height of the image sensor, such as the camera 530 of the moving object 1000, from the ground. As the image sensor for detecting the periphery of the moving object, such as the camera, may be installed on a body side of the moving object, H is expected to generally have a value less than 1. Moreover, considering an extreme situation where the body of the nearby moving object 1100 is attached to the ground, H may have a value of at least 0.

The reference shape means a general shape of a moving object, and herein, it may be assumed that feature points of a wheel and a body of the moving object have a reference shape located on a straight line or a front surface and side surfaces of the moving object have a reference shape forming a convex and gentle curve.

Accordingly, a straight-line distance model (hereinafter, a first case) and a convex smooth curve model (hereinafter, a second case) may be used, and a scheme using the first case will be described first.

As shown in FIG. 3, an estimated shape of the nearby moving object 1100 with respect to the obtained SD data is different from the reference shape of the moving object. Thus, while adjusting H between 0 and 1, SD data of each feature point for the estimated shape of the nearby moving object 1100 being most similar to a general moving object may be determined as corrected SD data.

To this end, a criterion for appropriate correction is required, and the straight-line distance model may use an assumption that the general shape of the moving object is similar to a straight line.

For this end, SD data of a feature point having a class being a body among feature points of the nearby moving object 1100 obtained from the image may be obtained by adjusting H, and a corrected feature point in which a reference feature point and the feature point of the corrected SD data form a distribution most similar to a straight line may be searched for.

More specifically, distances between a straight line passing through a reference feature point among the feature points of the nearby moving object and SD data corrected according to H of the other feature points may be compared. Preferably, for each H, a straight line having a minimum distance between the straight line passing through the reference feature point and the corrected SD data may be specified, and the minimum distance may be recorded or stored. H corresponding to the least value of the minimum distances for all Hs may be determined as a value for correction of SD data. SD data closest to the straight line, i.e., having the minimum distance may be determined as SD data for SD data correction according to the present disclosure. Alternatively, by using H selected above, SD data of a feature point may be corrected. Herein, the reference feature point may include a feature point closest to the image sensor such as the camera 530 of the moving object 1000, among feature points having a class being "wheel".

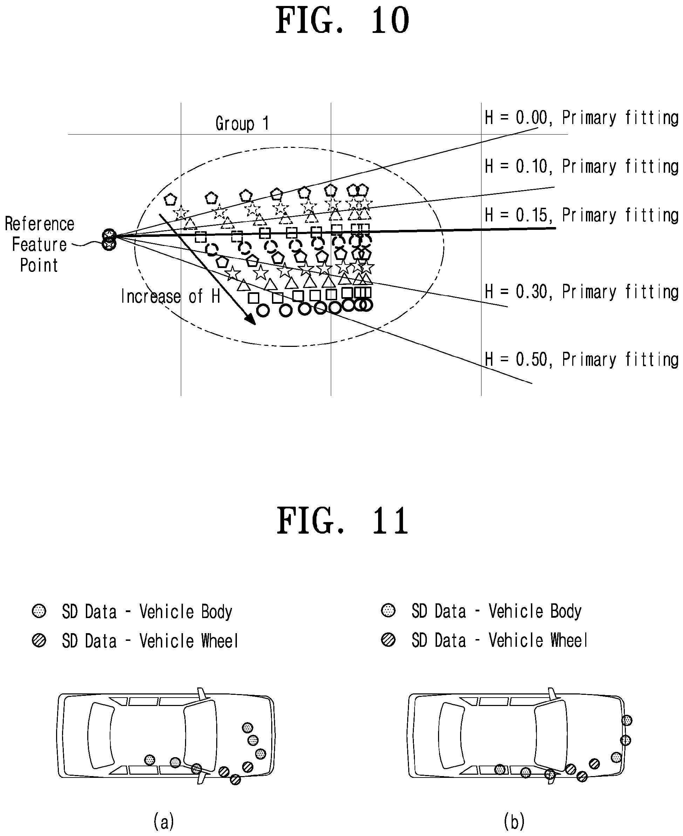

FIGS. 9 and 10 show an example using a straight-line distance for position correction of a nearby moving object according to the present disclosure.

FIG. 9 shows searching for corrected SD data having a minimum distance to a straight line passing through a reference feature point by correcting SD data of feature points belonging to two groups through change of H.

FIG. 10 shows comparing distances between corrected SD data and the straight line passing through the reference feature point while correcting SD data of a feature point belonging to Group 1 through change of H. Referring to FIG. 10, it may be seen that SD data of feature points for H = 0.15 has a minimum distance to a straight line.

Hereinbelow, a scheme using the second case will be described.

The first case uses an assumption that the outer boundary of the nearby moving object 1100 is close to the wheel and the straight line. In practice, a side surface of a moving object mostly has a straight line or a shape similar thereto, such that the foregoing assumption is appropriate.

However, a front surface of the moving object does not form a straight line with the front wheel.

Thus, as an additional or alternative SD data correction scheme, a scheme using the second case will be proposed.

Herein, this scheme is referred to as a "convex smooth curve model" that uses an assumption that the outer boundary of the nearby moving object 1100 includes a curve and a straight line (rather than a rectangle) as shown in FIG. 11. That is, a corner portion of the nearby moving object 1100 is generally formed convexly.

Thus, a line formed by a feature point having the class being "wheel" and a feature point located around the feature point and having the class being "body" may correspond to a convex smooth curve. Thus, it is necessary to search for corrected SD data of feature points having a convex curve shape and a smooth curve shape.

By using general exterior properties of the nearby moving object 1100, the distribution of feature points around the reference feature point may be identified while adjusting H.

For expression as an equation, it may be assumed that the reference feature point is C(Cx, Cy), a feature point 1 adjacent to the reference feature point is SD1(SD1x, SD1y), a feature point 2 adjacent to the reference feature point is SD2(SD2x, SD2y), the feature point 1 is to the left of the reference feature point, and the feature point 2 is to the right of the reference feature point. In this case, considering features of a smooth curve, a left limit and a right limit at the reference feature point may be equal to each other, or a left differential coefficient and a right differential coefficient at the reference feature point may be equal to each other. This may be expressed mathematically as below.$L = {lim}_{SD 1 \to c} \frac{SD {1}_{y} - {C}_{y}}{SD {1}_{x} - {C}_{x}}$

$R = {lim}_{SD 2 \to C} \frac{SD {2}_{y} - Cy}{SD {2}_{x} - {C}_{x}}$

Equation 6 indicates a left extreme value at the reference feature point, and Equation 7 indicates a right extreme value at the reference feature point. Accordingly, it is necessary to search for H such that L of Equation 6 and R of Equation 7 have the same or minimum value.

Moreover, when all feature points are mapped to a 2D plane, a slope between consecutive (or adjacent) feature points has to monotonically increase or decrease. This is a condition that takes into account the features of the convex curve.

In addition, when all feature points are mapped to the 2D plane, left feature points of the reference feature point may be classified as a first group and right feature points of the reference feature point may be classified as a second group.

To meet a convex curve shape, if a slope at consecutive (or adjacent) feature points of the first group monotonically increases, a slope at consecutive (or adjacent) feature points of the second group has to monotonically increase, or if the slope at consecutive (or adjacent) feature points of the first group monotonically decreases, the slope at consecutive (or adjacent) feature points of the second group has to monotonically decrease.

Moreover, to meet a smooth curve shape, a slope between the first group and the second group with respect to the reference feature point has to be minimized.

By adjusting H for the feature points of the first group and the second group, H satisfying the foregoing conditions may be searched for, and corrected SD data of the feature points in that case may be obtained.

FIG. 11 shows data before and after position correction of a nearby moving object according to the present disclosure. (a) of FIG. 11 indicates data before correction, and (b) of FIG. 11 indicates corrected data using the second case. The straight line indicates an actual outer boundary of a nearby moving object. As the SD data is corrected, it may be seen that corrected SD data similar to the actual outer boundary is obtained.

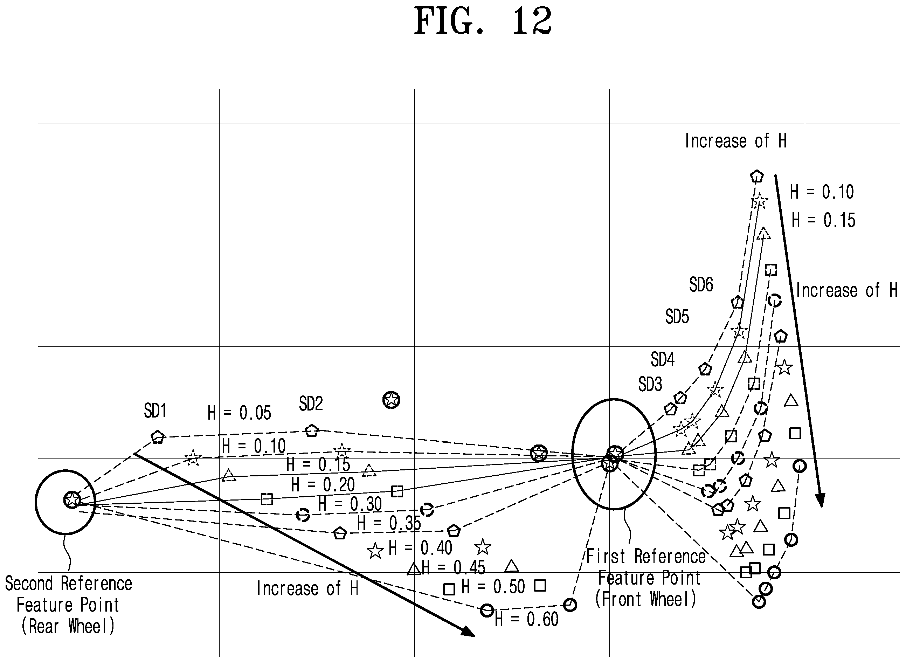

FIGS. 12, 13, and 14 show correction of SD data based on an example using a convex smooth curve model for position correction of a nearby moving object according to the present disclosure.

Referring to FIG. 12, SD data of feature points other than the reference feature point corrected according to H is shown. As H increases, the SD data may have a gradually concave shape at a first reference feature point (front wheel) and have a gradually convex shape at other feature points than the first reference feature point.

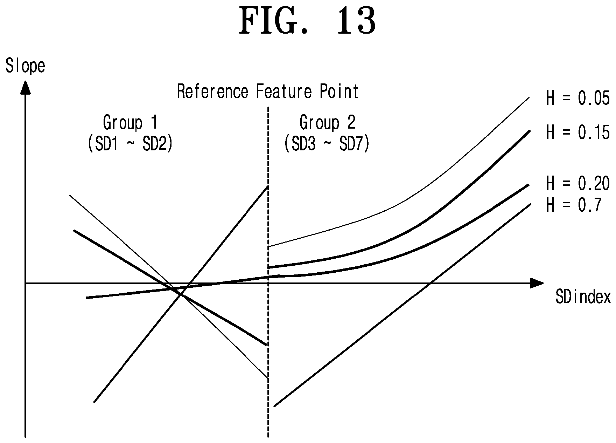

FIG. 13 shows a slope between adjacent feature points corrected according to H. For H = 0.2, a difference between Group 1 and Group 2 may be minimum, and a slope between consecutive feature points of Group 1 and Group 2 monotonically increases, satisfying a convex smooth curve shape.

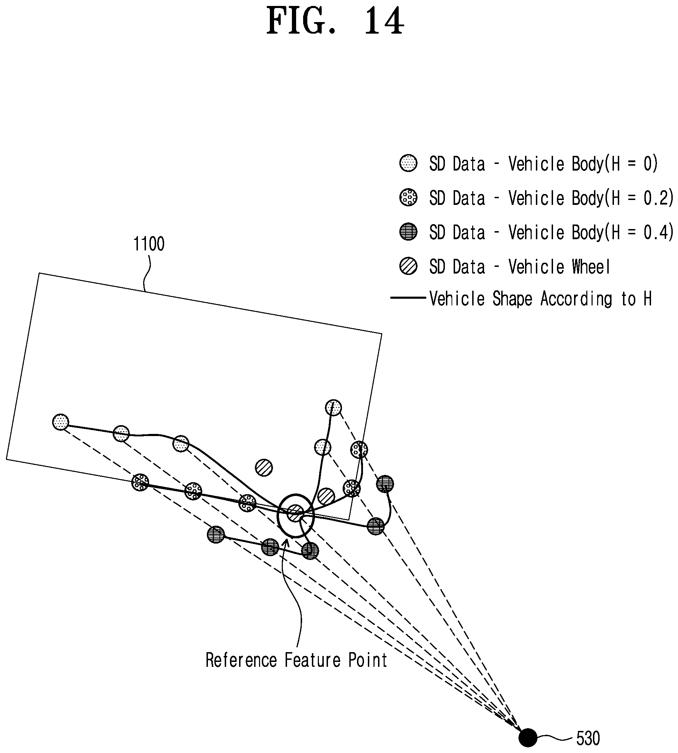

FIG. 14 shows a line connecting feature points corrected according to H to each other. A feature point having a class being "wheel" and being closest to the image sensor, such as the camera 530 of the moving object 1000, may be set as a reference point c. It may be seen that, for H = 0.2, an estimated outer boundary of the nearby moving object 1100 has a convex smooth curve shape.

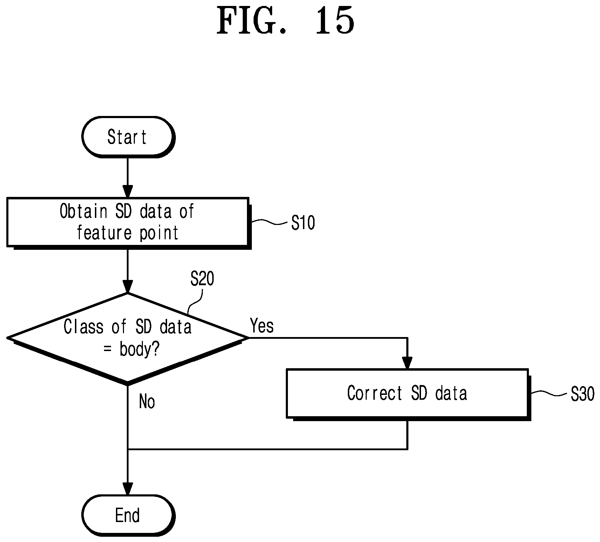

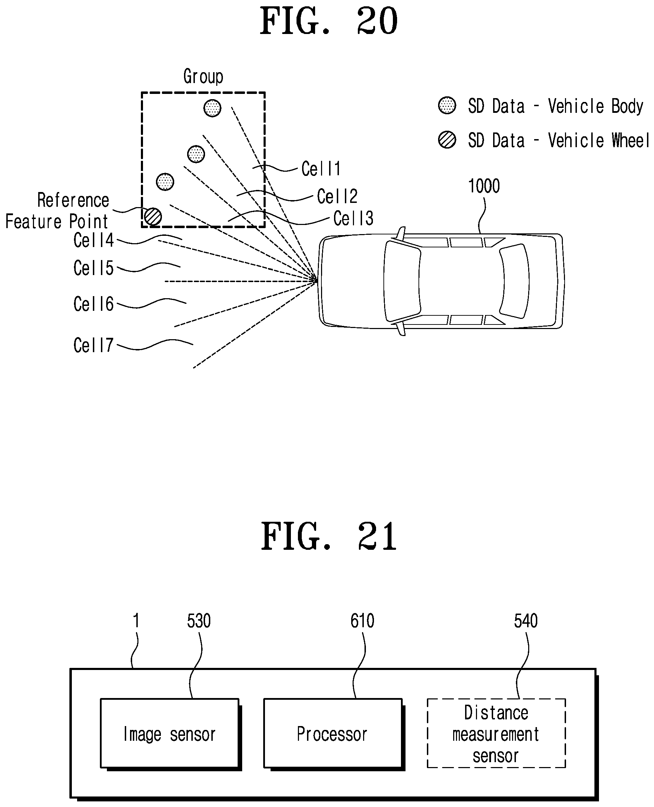

FIG. 15 is a flowchart of a method of correcting a position of a nearby moving object according to the present disclosure. The method shown in FIG. 15 may be performed by an apparatus 1 for detecting a nearby moving object or a processor 610 of the apparatus 1. The apparatus 1 or the processor 610 will be described below with reference to FIG. 21.

The apparatus 1 may be configured to obtain SD data of a feature point of the nearby moving object 1100, in operation S10.

The apparatus 1 may determine whether there is SD data having the class being the body, out of the obtained SD data, in operation S20.

If there is the SD data having the class being the body, the apparatus 1 may be configured to correct the SD data having the class being the body, in operation S30.

The apparatus 1 may be configured to terminate the method if there is no SD data having the class being the body.

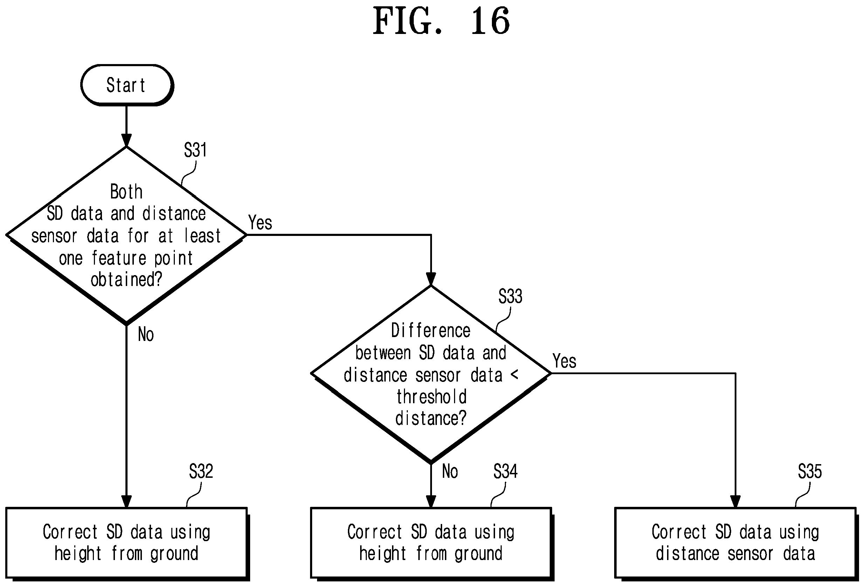

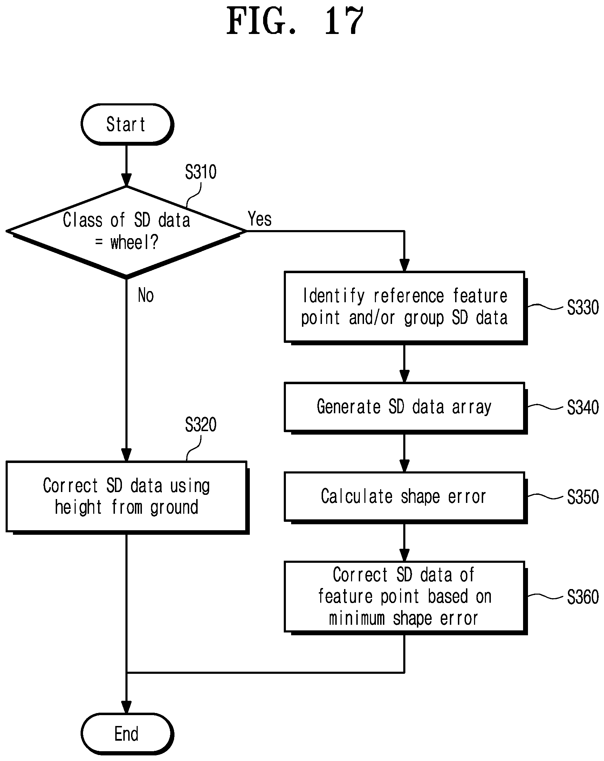

FIGS. 16 and 17 are flowcharts of a method of correcting a position of a nearby moving object according to the present disclosure. The method shown in FIGS. 16 and 17 may be performed by an apparatus 1 for detecting a nearby moving object or the processor 610 of the apparatus 1. The apparatus 1 or the processor 610 will be described below with reference to FIG. 21.

FIGS. 16 and 17 are flowcharts for describing in more detail operation S30 of FIG. 15.

FIG. 16 will be described first.

The apparatus 1 may be configured to determine whether both SD data and distance sensor data (i.e., a distance obtained through a distance measurement sensor) are obtained for at least one feature point, in operation S31.

If there is not feature point for which both SD data and distance sensor data are obtained, the apparatus 1 may be configured to correct SD data of feature points by using a height of the body of the nearby moving object 1100 from the ground, in operation S32. That is, the apparatus 1 may correct SD data of a feature point by using the above-described first scheme.

If there is at least one feature point for which both SD data and distance sensor data are obtained, the apparatus 1 may be configured to determine whether a distance between a distance to the nearby moving object 1100 based on the SD data and a distance to the nearby moving object 1100 based on the distance sensor data is within a threshold distance, in operation S33.

If the difference between the two distances is greater than or equal to the threshold distance, the apparatus 1 may be configured to correct the SD data of the feature points by using a height of the body of the nearby moving object 1100 from the ground, in operation S34. That is, the apparatus 1 may correct the SD data of the feature point by using the above-described first scheme.

If the difference between the two distances is within the threshold distance, the apparatus 1 may be configured to correct the SD data of the feature point by using the distance sensor data of the at least one feature point, in operation S35. That is, the apparatus 1 may correct the SD data of the feature point by using the above-described second scheme.

As such, the present disclosure may apply a different scheme depending on whether distance sensor data of any one feature point exists in correcting the SD data of the feature point of the nearby moving object 1100.

FIG. 17 will be described.

The apparatus 1 may determine whether there is SD data having a class being the wheel, out of the obtained SD data, in operation S310.

If there is no SD data having the class being the wheel, the apparatus 1 may be configured to correct the SD data of the feature points by using the height of the body of the nearby moving object 1100 from the ground, in operation S320. That is, the apparatus 1 may correct SD data of a feature point by using the above-described first scheme.

If there is SD data having the class being the wheel, the apparatus 1 may be configured to correct shape-error-based correction of SD data.

More specifically, the apparatus 1 may be configured to identify a reference feature point among feature points having the class being the wheel, in operation S330. If there are a plurality of feature points having the class being the wheel, the apparatus 1 may be configured to set a feature point closest to the moving object 1000 or the apparatus 1 as the reference feature point. Additionally or alternatively, the apparatus 1 may be configured to group feature points according to SD data, in operation S330. That is, as shown in FIG. 9 or FIGS. 12 to 14, feature points located to the left or to the right of the reference feature point may be grouped into different groups.

The apparatus 1 may arrange the feature points according to the SD data to generate an SD data array. For example, referring to FIG. 12, the SD data array may be generated as (=) [SD1, SD2, SDC(SD data of the first reference feature point), SD3, SD4, SD5, SD6, SD7]. SDX may be SD coordinates of respective SD data. The SD data array may be generated in plural.

The apparatus 1 may be configured to calculate a shape error for the SD data array while adjusting H, in operation S350. The shape error may mean an error with corrected SD data according to adjustment of H based on a shape of a general moving object. The third scheme described above (the straight-line distance or the convex smooth curve model) may be used.

The apparatus 1 may be configured to correct SD data of a feature point according to H having a minimum shape error or obtain SD data of a feature point corresponding to H, in operation S360.

As such, the present disclosure may apply a different scheme depending on whether there is SD data of a feature point having the class being the wheel in correcting the SD data of the feature point of the nearby moving object 1100.

Meanwhile, the three schemes for correcting the SD data proposed herein may be prioritized.

For example, i) second scheme, ii) third scheme, and iii) first scheme may be prioritized in that order. Thus, i) it may be first determined whether the second scheme is applicable (i.e., whether there is the distance sensor data for at least one feature point), and then it may be determined whether there is SD data of a feature point having the class being the wheel. For cases to which the foregoing two schemes are not applicable, the fist scheme, i.e., correction of SD data using the preset height of the body of the nearby moving object 1100 from the ground may be performed.

A procedure for correcting SD data using the three schemes considering prioritization may be described in combination with procedures of FIGS. 16 and 17. If there is no feature point for which distance sensor data is obtained in operation S31 of FIG. 16, operation S32 may not be performed and the procedure of FIG. 17 may be initiated. Thus, even if there is no feature point for which the distance sensor data is obtained in operation S31 of FIG. 16, according to whether there is SD data having the class being the wheel, the SD data may be corrected using the height of the nearby moving object 1100 from the ground in operation S320 or using a minimum shape error in operations S330 to S360.

Moreover, the present disclosure aims to correct SD data of a feature point having the class being the body, such that the procedure may be initiated or activated if the SD data of the feature point having the class being the body is obtained.

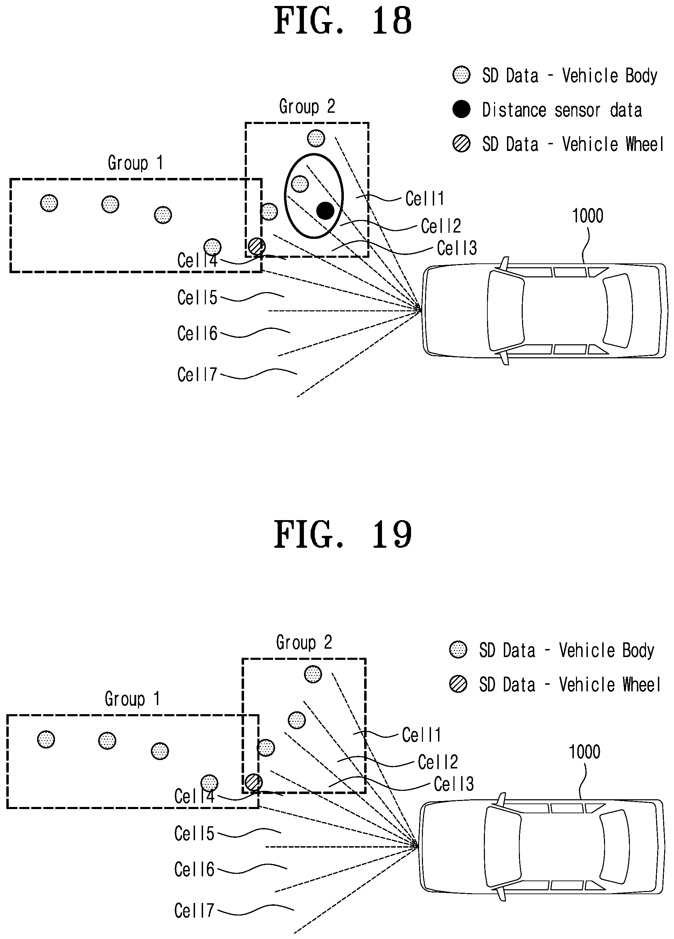

FIGS. 18, 19, and 20 show a scenario for position correction of a nearby moving object according to the present disclosure.

FIG. 18 shows SD data obtained by the moving object 1000. Left feature points with respect to the reference feature point may be grouped into Group 1, and right feature points with respect to the reference feature point may be grouped into Group 2.

Correction of SD data of the feature point of Group 1 and correction of SD data of the feature point of Group 2 may use different schemes. That is, in the foregoing description, a total of three schemes for correcting SD data have been proposed; the third scheme may be used for the feature point of Group 1 and the second scheme may be used for the feature point of Group 2. This is because there are both SD data and distance sensor data for the feature point detected in Cell 2.

That is, for a feature point of Group 1, SD data of the feature points may be corrected using a straight-line distance error model, and for a feature point of Group 2, H or bumperH may be obtained by substituting distance sensor data into Equation 4 and may be used to correct SD data of the feature point. In this case, SD data corrected using H or bumperH obtained for the other feature points of Group 2 as well as the feature point included in Cell 2 may be obtained.

FIG. 19 shows SD data obtained by the moving object 1000. Left feature points with respect to the reference feature point may be grouped into Group 1, and right feature points with respect to the reference feature point may be grouped into Group 2.

SD data of feature points of Group 1 and Group 2 may be corrected using the third scheme described above. The first case or the second case of the third scheme may be used.

FIG. 20 shows SD data obtained by the moving object 1000. SD data of the feature point other than the shown reference feature point may be corrected using the first case of the third scheme described above.

FIG. 21 is a block diagram of an apparatus for detecting a nearby moving object according to the present disclosure.

The apparatus 1 for detecting a nearby moving object (hereinafter, referred to as the "apparatus 1") shown in FIG. 21 may be mounted on or included in the moving object 1000. The apparatus 1 of FIG. 21 may obtain position information of a nearby moving object or correct obtained SD data, as shown in FIGS. 5 to 20 described above.

The apparatus 1 may include the image sensor 530 and the processor 610.

The image sensor 530 may be configured to obtain an image by photographing the nearby moving object 1100.

The processor 610 may be configured to obtain position information of a plurality of feature points of the nearby moving object 1100, more specifically, SD data, from the obtained image. That is, the position information of the plurality of feature points is obtained from 2D coordinates or pixel information obtained by projecting the nearby moving object 1100 detected from the image perpendicularly to the ground, and thus may include position information in which height information of the nearby moving object 1100, especially, of the body of the nearby moving object 1100 is not reflected.

The processor 610 may be configured to estimate position information or shape information of the nearby moving object 1100 by correcting the obtained position information of the feature point.

The processor 610 may be configured to correct obtained position information of the feature point having the class being the body of the moving object.

The processor 610 may be configured to correct the obtained position information of the feature point by using a relationship among position information of the image sensor, position information of a point at which the location of the image sensor is projected perpendicularly to the ground, and the obtained position information of the feature point.

Alternatively, the processor 610 may be configured to correct the obtained position information of the feature point by using a relationship among height information of the image sensor from the ground, position information of a point at which the location of the image sensor is projected perpendicularly to the ground, and the obtained position information of the feature point.

Correction of the obtained position information of the feature point will refer to FIGS. 5 and 6 and a description thereof.

The processor 610 may also be configured to obtain the corrected position information of the feature point by using a preset value of the height or distance from the ground of the body of the nearby moving object 1100 and the relationship.

The processor 610 may also be configured to obtain a coefficient for correction of a first feature point among a plurality of feature points by using a distance obtained for the first feature point by a distance measurement sensor and the relationship, and obtain corrected position information of the other feature points using the obtained coefficient. The obtained coefficient may be a value associated with an estimate of the height information from the ground of the body of the nearby moving object 1100.

The processor 610 may also be configured to obtain corrected position information of the plurality of feature points while adjusting a ratio of the height or distance of the body of the nearby moving object 1100 from the ground to the height of the image sensor from the ground between 0 and 1, and determine a rate of cases where a sum of minimum distances between a straight line passing through a reference feature point among the plurality of feature points and a corrected position of each of the plurality of feature points is minimum. In this case, the plurality of feature points may be estimated as having position information corrected at the determined rate.

The processor 610 may also be configured to obtain corrected position information of the plurality of feature points while adjusting a ratio of the height or distance of the body of the nearby moving object from the ground to the height of the image sensor from the ground between 0 and 1, and determine a rate of cases where a slope difference between two straight lines connecting two feature points adjacent to the reference feature point among the plurality of feature points to the reference feature point is minimum. In this case, the plurality of feature points may be estimated as having position information corrected at the determined rate.

Herein, the reference feature point may include feature points closest to the apparatus 1, the image sensor 530 of the apparatus 1, or the moving object 1000 having the apparatus 1 mounted thereon, among feature points having the class being the wheel of the moving object.

The processor 610 may also be configured to divide the plurality of feature points into at least two groups. The processor 610 may be configured to obtain a coefficient for correction of a first feature point among feature points of a first group of at least two groups by using a distance obtained for the first feature point by the distance measurement sensor and the relationship, and obtain corrected position information of the other feature points among the feature points of the first group by using the obtained coefficient. The processor 610 may also be configured to obtain corrected position information of a feature point of a second group among the at least two groups while adjusting a ratio of a height of the body of the nearby moving object from the ground to the height of the image sensor from the ground between 0 and 1, and determine a rate of cases where a slope difference between two straight lines connecting two feature points adjacent to the reference feature point among the feature points of the second group to the reference feature point is minimum. In this case, the feature point of the second group may be estimated as having position information corrected at the determined rate.

Meanwhile, the processor 610 may be configured to determine a possibility of collision with the nearby moving object 1100 based on the corrected position information of the feature points of the nearby moving object 1100. If it is determined that there is the possibility of collision with the nearby moving object 1100, the processor 610 may be configured to perform braking control or evasive steering control of the moving object 1000. If it is determined that there is the possibility of collision with the nearby moving object 1100, the processor 610 may be configured to output a collision warning alarm through a human-machine interface such as a display or a speaker.

Specifically, the processor 610 may be configured to perform correction of SD data of a feature point of the nearby moving object 1100 according to the above-described SD data correction scheme, and output braking control, steering avoidance control, a proximity warning, or a collision warning, based on the corrected SD data.

For matters related to the apparatus 1, which are not described with reference to FIG. 21, the description made with reference to FIGS. 5 to 20 may be referred to and may be applied to the apparatus 1 shown in FIG. 21.

Meanwhile, as another embodiment of the present disclosure, a moving body or the vehicle 1000 including the apparatus 1 for detecting a nearby moving object as described above is proposed, and such a moving object or a vehicle may also fall within the scope of the present disclosure.

In the above specification, it has been described that the apparatus for detecting a nearby moving object or correcting the position information of the nearby moving object or each component included therein performs control, but the "apparatus", "system" and the components included therein may be merely names and the scope of rights is not dependent on them.

That is, the proposed technology may be performed by other names than a device, a processor, or a controller, and in addition, the method, scheme, etc., described above may be performed by software for detecting a nearby moving object or correcting position information of the nearby moving object or a code readable by a computer, other machines, devices, etc.

In addition, as another aspect of the present disclosure, the operation of the proposed technology described above may be provided as a code that may be implemented, performed or executed by a "computer" (a comprehensive concept including a system on chip (SoC), a (micro) processor, etc.), or a computer-readable storage medium, a computer program product, etc., storing or including the code. The scope of the present disclosure may be extended to the code or a computer-readable storage medium or a computer program product storing or including the code.

The present disclosure has the following effects.

The present disclosure may more accurately detect a position of a nearby moving object.

Moreover, the present disclosure may prevent erroneous braking or collision in a parking-related driver assistance system or test standards therefor.

The effects of the present disclosure are not limited to those mentioned above. Other effects not described above may be understood by those of ordinary skill in the art from the description of the present disclosure below.

The detailed description of the preferred embodiments of the present disclosure as set forth above has been provided to enable those of ordinary skill in the art to implement and practice the present disclosure.

## Claims

1. An apparatus for detecting a nearby moving object, the apparatus comprising:
an image sensor configured to obtain an image of surrounding areas; and
a processor configured to obtain position information of a plurality of feature points of the nearby moving object from the obtained image and estimate position information or shape information of the nearby moving object by correcting the obtained position information of the feature points,
wherein the processor is configured to reflect height information of a body of the nearby moving object from ground to the obtained position information of the feature points.

2. The apparatus of claim 1, wherein the processor is configured to correct position information of a feature point having a class being a body of the moving object among the plurality of feature points.

3. The apparatus of claim 1, or 2, wherein the processor is configured to correct the obtained position information of the feature points by using a relationship among information about a height of the image sensor from the ground, information about a position of a point at which a position of the image sensor is projected perpendicularly to the ground, and the obtained position information of the feature points.

4. The apparatus of claim 3, wherein the processor is configured to obtain corrected position information of the feature points by using a preset value of a height or a distance of the body of the nearby moving object from the ground and the relationship.

5. The apparatus of claim 3, or 4, wherein the processor is configured to obtain a coefficient for correction of a first feature point among the plurality of feature points by using a distance to the first feature point which is obtained by a distance measurement sensor and the relationship, and obtain corrected position information of the other feature points using the obtained coefficient, and
wherein the obtained coefficient is related to an estimate value of a height or a distance of the body of the nearby moving object from the ground.

6. The apparatus of any one of claims 3 to 5, wherein the processor is configured to:
obtain corrected position information of the plurality of feature points while adjusting a ratio of a height or a distance of the body of the nearby moving object from the ground to a height of the image sensor from the ground between 0 and 1; and
determine a ratio in a case where a sum of minimum distances between a straight line passing through a reference feature point among the plurality of feature points and a corrected position of each of the plurality of feature points becomes minimum, and
wherein the plurality of feature points are estimated to have position information corrected based on the determined ratio.

7. The apparatus of any one of claims 3 to 6, wherein the processor is configured to:
obtain corrected position information of the plurality of feature points while adjusting a ratio of a height or a distance of the body of the nearby moving object from the ground to a height of the image sensor from the ground between 0 and 1; and
determine a ratio in a case where a slope difference between two straight lines connecting two feature points adjacent to the reference feature point among the plurality of feature points to the reference feature point become minimum, and
wherein the feature points are configured to have position information corrected based on the determined ratio.

8. The apparatus of claim 7, wherein the reference feature point comprises a feature point closest to the apparatus among feature points having a class being a wheel of the moving object.

9. The apparatus of any one of claims 3 to 8, wherein the processor is configured to:
divide the plurality of feature points into at least two groups;
for feature points of a first group among the at least two groups, obtain a coefficient for correction of a first feature point among the feature points of the first group by using a distance to the first feature point which is obtained by the distance measurement sensor and the relationship, and obtain corrected position information of the other feature points among the feature points of the first group using the obtained coefficient; and
for feature points of a second group among the at least two groups, obtain corrected position information of the feature points of the second group while adjusting a ratio of a height of the body of the nearby moving object from the ground to a height of the image sensor from the ground between 0 and 1, and determine a ratio in a case where a slope difference between two straight lines connecting two feature points adjacent to a reference feature point among the feature points of the second group to the reference feature point become minimum, and
wherein the feature points of the second group are estimated to have position information corrected based on the determined ratio.

10. A method for detecting a nearby moving object, the method comprising:
obtaining an image of surrounding areas; and
obtaining position information of a plurality of feature points of the nearby moving object from the obtained image and estimate position information or shape information of the nearby moving object by correcting the obtained position information of the feature points,
wherein a height information of a body of the nearby moving object from ground is reflected to the obtained position information of the feature points.

11. The method of claim 10, further comprising:
correcting position information of a feature point having a class being a body of the moving object among the plurality of feature points.

12. The method of claim 10, or 11, further comprising:
correcting the obtained position information of the feature points by using a relationship among information about a height of the image sensor from the ground, information about a position of a point at which a position of the image sensor is projected perpendicularly to the ground, and the obtained position information of the feature points.

13. The method of claim 12, further comprising:
obtaining corrected position information of the feature points by using a preset value of a height or a distance of the body of the nearby moving object from the ground and the relationship.

14. The method of claim 12, or 13, further comprising:
obtaining a coefficient for correction of a first feature point among the plurality of feature points by using a distance to the first feature point which is obtained by a distance measurement sensor and the relationship; and
obtaining corrected position information of the other feature points using the obtained coefficient,
wherein the obtained coefficient is related to an estimate value of a height or a distance of the body of the nearby moving object from the ground.

15. A moving object configured to detect a nearby moving object, the moving object comprising:
an image sensor configured to obtain an image of surrounding areas; and
a processor configured to obtain position information of a plurality of feature points of the nearby moving object from the obtained image and estimate position or shape information of the nearby moving object by correcting the obtained position information of the feature points,
wherein the processor is configured to reflect height information of a body of the nearby moving object from ground to the obtained position information of the feature points.
